# EUROPÄISCHE PATENTSCHRIFT

(11) **EP 0 448 791 B1**
(45) Veröffentlichungstag und Bekanntmachung des Hinweises auf die Patenterteilung: **30.08.1995**
(21) Anmeldenummer: 90122800.7
(22) Anmeldetag: 29.11.1990
(51) Int. Cl.: B23K 35/30

(54) **Schweissmetallegierung hoher Streckgrenze und Verfahren zur Ablagerung derselben**
High yield strength weld metal alloy and method for its deposition
Alliage de soudage à limite élastique élevée et procédé pour son dépôt

(30) Priorität: 29.03.1990 US 501167
(43) Veröffentlichungstag der Anmeldung: 02.10.1991
(73) Patentinhaber: THE LINCOLN ELECTRIC COMPANY, Cleveland, Ohio 44117-1199 (US)
(72) Erfinder: Chai, Chang-Shung, Highland Heights, Ohio 44143 (US); Fink, David A., University Heights, Ohio 44118 (US); Gonzalez, John, Willoughby, Ohio 44094 (US)
(74) Vertreter: Vollbach, Hans, Dipl.-Ing.

(56) Entgegenhaltungen:
- DE-C- 612 579
- FR-A- 2 220 341
- PATENT ABSTRACTS OF JAPAN, Band 13, Nr. 392 (M-865)[3740] 30. August 1989;& JP-A-1 138 089 (NIPPON STEEL) 30-05-1989
- PATENT ABSTRACTS OF JAPAN, Band 12, Nr. 424 (M-761)[3271] 10. November 1988;
- & JP-A-63 157 795 (NIPPON STEEL) 30-06-1988
- PATENT ABSTRACTS OF JAPAN, Band 8, Nr. 154 (M-310)[1591], 18. Juli 1984;& JP-A-59 50 992 (DAIDO TOKUSHUKO) 24-03-1984
- COMPTES RENDUS DE L'ACAD. DES SCIENCES SERIES II - MEC./PHYS./CHIMIE, Band 308,Nr. 9, Serie II, 2. März 1989, Seiten 841-846, Paris, FR; N. TERAO et al.:"Soudabilité des aciers double phase à haute teneur en manganèse"

## Beschreibung

Die Erfindung betrifft ein abschmelzendes Schweißelement, insbesondere für hochfeste Werkstücke, zur Ablagerung einer Schweißmetallraupe auf einem Stahlwerkstück. Die Erfindung ist weiterhin auf ein Verfahren zur Ablagerung einer Schweißmetallraupe auf einem Stahlwerkstück durch Lichtbogenschweißen gerichtet.

Ein derartiges Schweißelement, z.B. eine Elektrode, ist in der älteren, nicht vorveröffentlichten EP-A-417 546 beschrieben und kann bevorzugt für das MIG-Schweißen hochfester Metalle eingesetzt werden, wie sie in bestimmten militärischen und industriellen Anwendungsbereichen gefordert werden. Die Erfindung wird im Zusammenhang mit dieser Anwendung erläutert werden.

Mit steigender Streckgrenze des Werkstückmetalls auf Festigkeitswerte, wie sie beispielsweise den militärischen Richtlinien HY-80, HY-100 und sogar HY-130 entsprechen, ist es insbesondere beim nicht-gerichteten Schweißen mit hohen Abschmelzleistungen problematisch, die gewünschte hohe Schlagfestigkeit und eine nur geringe Rißbildung sicherzustellen. Beim Schweißen dieser hochfesten Stähle, wie insbesondere solcher Stähle, deren Festigkeit über HY-80 (549,4 N/mm²) liegt, wird als abschmelzende Elektrode normalerweise eine massive Metalldrahtelektrode verwendet, die beim nicht-gerichteten Schweißen, d.h. beim Außer-Positionsschweißen, im allgemeinen einen Durchmesser von etwa 1,17 mm und beim Schweißen von oben im allgemeinen einen Durchmesser von etwa 1,57 mm aufweist. Das Schweißen von hochfesten Stählen, die in ihrer Festigkeit dem Stahl HY-100 entsprechen oder dessen Festigkeit übersteigen, hat sich selbst mit solchen massiven MIG-Schweißdrähten als äußerst schwierig herausgestellt.

In der eingangs genannten früheren Patentanmeldung ist eine Elektrode offenbart, mit der eine akzeptable Schweißraupe geschweißt werden kann und die bei Raumtemperatur verwendbar ist, sofern das Grundmetall das Schweißen bei Raumtemperatur zuläßt. Die bekannte Elektrode bzw. das Schweißelement läßt sich für die Erzeugung eines hochfesten Schweißmetalls bei hochfesten militärischen Stählen einsetzen. In Einzelfällen ist eine bestimmte Vorwärmung zur Vermeidung der Rißbildung oder anderer Schwierigkeiten am Werkstück selbst erforderlich.

Aus der Zeitschrift "Comptes Rendus de l'Acad. des Sciences", Nr. 308, 2. März 1989, S. 841-846 ist ein geschweißter Stahl mit 0,1 Gew.-% Kohlenstoff, 2,95 Gew.-% Mangan, 0,47 Gew.-% Silicium und 0,07 Gew.-% Titan bekannt, der in einem TIG-Schweißverfahren und einem Elektronenstrahlschweißverfahren geschweißt ist, wobei die 0,2%-Streckgrenze des Stahls etwa 580 MPa beträgt.

Aufgabe der Erfindung ist es, ein Schweißelement zu schaffen, mit dessen Hilfe sich an hochfesten Stahlwerkstücken auch im Außer-Positionsschweißen eine Schweißmetallegierung erreichen läßt, deren Festigkeit oberhalb von 583,5 bis 686,7 N/mm² (85000-100000 psi) liegt und die bei geringer Neigung zur Rißbildung eine hohe Kerbzähigkeit aufweist.

Diese Aufgabe wird durch ein abschmelzendes Schweißelement zur Ablagerung einer Schweißmetallraupe auf einem Stahlwerkstück mit einer Schweißwärmezufuhr von weniger als 50,7 kJ/cm gelöst, wobei die Streckfestigkeit des Schweißmetalls oberhalb etwa 581,5 N/mm² liegt und die als Schweißmetall eingesetzte Stahllegierung folgende Zusammensetzung aufweist:
0,0 - 0,1 Gew.-% Kohlenstoff
2,5 - 4 Gew.-%. Mangan
0,01 - 0,05 Gew.-% Titan
0 - 1 Gew.-% Silicium
0 - 2 Gew.-% Nickel
0 - 0,04 Gew.-% Sauerstoff
Optional 0 - 1,5 Gew.-% Molybdän
Rest Eisen und übliche
Verunreinigungen,
und wobei der Anteil von Wasserstoff im Schweißmetall unterhalb 2,0 ppm liegt. Ein derartiges Schweißelement wird nach dem erfindungsgemäßen Verfahren zur Ablagerung einer Schweißmetallraupe auf einem Stahlwerkstück verwendet, wobei es mittels eines Lichtbogens aufgeschmolzen und während des Aufschmelzens zur Ablagerung mit einer solchen Geschwindigkeit entlang dem Werkstück bewegt wird, daß die Schweißwärmezufuhr unterhalb 50,7 KJ/cm liegt.

Mit dem erfindungsgemäßen Schweißelement läßt sich eine Schweißmetallegierung erreichen, die eine extrem hohe Festigkeit bei gleichzeitiger hoher Kerbfestigkeit und Rißfestigkeit hat. Dabei muß das zu schweißende Werkstück im allgemeinen nur wenig oder sogar überhaupt nicht vorgewärmt werden, es sei denn, daß dies aufgrund der werkstoffspezifischen Eigenschaften des Werkstücks erforderlich ist.

Die mit dem erfindungsgemäßen Schweißelement erzeugte Schweißmetallegierung, die auf dem hochfesten Stahl-Werkstück abgelegt wird, hat eine Charpy-Schlagfestigkeit, deren Wert bei einer Temperatur von -17°C (0°F) oberhalb von 40 liegt. Bei den bekannten Schweißelementen nimmt die Kerbschlagfestigkeit deutlich ab, wenn die Streckfestigkeit der Schweißmetallegierung der Raupe durch Modifizierung ihres Legierungsgehalts erhöht wird. Durch das erfindungsgemäße Legierungssystem wird eine akzeptabel hohe Kerbfestigkeit selbst bei solchen Festigkeitswerten erreicht, die 892,7 N/mm² (130000 psi) deutlich übersteigen. Bei einer Festigkeit unter 824 N/mm² (120000 psi) übersteigt die Charpy-Zahl bei -18°C deutlich den Wert 50 und erreicht in manchen Fällen sogar den Wert 65 oder 70. Mit der Erfindung läßt sich eine Legierung für die Schweißmetallraupe erzielen, bei der die Kerbfestigkeit unabhängig von der Streckfestigkeit auf einem hohen Niveau verbleibt.

Ein weiterer Vorteil des erfindungsgemäßen Schweißelements besteht darin, daß sich hiermit eine Schweißnaht mit einer ausgezeichneten Rißfestigkeit herstellen läßt. Ein Anzeichen für die Höhe der Rißfestigkeit ergibt sich indirekt aus der möglichen Dehnung des Legierungsmetalls der Schweißraupe. Durch Einstellung der Legierungsbestandteile nach Maßgabe der vorliegenden Erfindung und innerhalb der erfindungsgemäß vorgesehenen Bereiche ergibt sich eine prozentuale Dehnung, die größer ist als etwa 18% bei den erfindungsgemäß vorgesehenen Streckfestigkeiten. Die Dehnung übersteigt aber 18%, wenn die Streckfestigkeit der Schweißmetallegierung durch Veränderung des Legierungsmaterials und der Legierungsanteile des erfindungsgemäßen Schweißelements abnimmt.

Das erfindungsgemäße Schweißelement ist auch in Außer-Schweißposition sehr gut schweißbar, wobei der Anteil an diffundierbarem Wasserstoff in der abgelegten Schweißraupe weniger als 2,0 ppm beträgt und der Sauerstoffanteil im Schweißmetall kleiner als 0,04 Gew.-% ist. Mit dem Schweißelement wird ein Schweißmetall erzeugt, dessen Streckfestigkeit oberhalb 583,5 N/mm² liegt. Durch die besondere Zusammensetzung des erfindungsgemäßen Schweißelements kann die Schweißmetallraupe in einem Schweißverfahren aufgebracht werden, bei dem die zugeführte Schweißwärme unterhalb von 50,7 kJ/cm (130 kJ/in) liegt. Frühere Versuche zur Erzielung einer hochfesten Stahl-Schweißraupe haben stets eine erhebliche Vorwärmung des Werkstücks selbst und eine niedrigere Wärmezufuhr beim Schweißprozeß erforderlich gemacht.

In bevorzugter Ausgestaltung der Erfindung liegt der Kohlenstoffgehalt in der das Schweißmetall bildenden Legierung im Bereich von 0,03-0,09 Gew.-% und der Siliciumgehalt im Bereich von 0,2-0,6 Gew.-% des Schweißmetalls. Der Nickelgehalt liegt vorzugsweise im Bereich von 0,08-1,8 Gew.-% und der Sauerstoffgehalt zweckmäßig im Bereich von 0,015-0,035 Gew.-%. Durch die so festgelegten Legierungsanteile und Legierungsbestandteile des Schweißelements lassen sich sowohl die gewünschte hohe Streckfestigkeit als auch zugleich die guten mechanischen Eigenschaften des Schweißmetalls besonders gut erreichen.

Durch den niedrigen Gehalt an diffundierbarem Wasserstoff unterhalb etwa 2,0 ppm und dem hohen Mangangehalt im Schweißelement hat die Schweißmetallegierung einen hohen Martensitanteil und daher eine hohe Streckfestigkeit, ohne daß dabei die Kerbzähigkeit verlorengeht oder die Rißfestigkeit unerwünscht vermindert wird. Nach der Erfindung kann der Mangangehalt auf über 3,0 % erhöht werden, um Festigkeitswerte oberhalb 686,7 N/mm² (100000 psi) zu erreichen. Mit steigendem Mangangehalt ergibt sich eine Steigerung der Streckfestigkeit. Der Mangangehalt in der Legierung läßt sich auf etwa 4,0 % anheben, wodurch eine Streckfestigkeit oberhalb 893 N/mm² (130000 psi) erhalten werden kann. Weiterhin wird in der Legierung der Nickelanteil gegenüber bekannten Schweißelementen wesentlich verringert, und zwar auf einen Wert, der unterhalb 2,0 Gew.-% liegt. Das Verhältnis zwischen den die Streckfestigkeit erhöhenden Legierungsbestandteilen Mangan und Nickel ist folglich gegenüber den bekannten Legierungen bei hochfesten Stählen genau umgekehrt. Es konnte festgestellt werden, daß die Verwendung von Mangan zur Erhöhung der Streckgrenze in den Schweißmetallegierungen günstiger ist als die Verwendung von Nickel. Hinzu kommt, daß durch Erhöhung des Mangananteils bei Verminderung des Nickels einige der schädlichen Wirkungen des Nickels im Schweißmetall unterdrückt werden können.

Aus oben stehendem ergibt sich, daß es mit der Erfindung möglich ist, eine neue, hochfeste Legierung zur Verwendung als Schweißmetallraupe herzustellen, die in einem Lichtbogenschweißprozeß mit einer Schweißwärmezufuhr von weniger als 50,7 kJ/cm (130 kJ/in) und sogar im Bereich von 21,5 kJ/cm bis 42,9 kJ/cm (55-110 kJ/in) erzeugt werden kann. Die erzeugte Legierung selbst zeichnet sich sogar bei hohen Streckfestigkeiten im Bereich von 895 N/mm² (130000 psi) durch eine hohe Streckfestigkeit, eine hohe Kerbzähigkeit und eine geringe Rißneigung aus. Eine Schweißraupenlegierung dieser Art war mit den bisher bekannten Schweißelementen nicht erreichbar.

Besonders vorteilhaft ist es, wenn das Schweißelement aus einer Kernelektrode besteht, die als Flußmittel im Kernmaterial pulvriges Calciumfluorid in einer Menge von weniger als 1,6 %, vorzugsweise in einer Menge von 0,1-0,9 des Elektrodengesamtgewichts enthält. Dabei kann erfindungsgemäß eine abschmelzende Lichtbogenschweißelektrode bzw. ein Schweißelement verwendet werden, wie es aus der bereits genannten, früheren Patentanmeldung bekannt ist, das in einem Stahlmantel einen kompakten bzw. verdichteten Kern mit Metallegierungspulver und dem Flußmittel enthält. Das Flußmittel ist dabei eine im wesentlich zu 100 % basische Verbindung, mit deren Hilfe der im Schweißmetall enthaltende Sauerstoff auf ein Niveau unterhalb etwa 0,04 % herabgesetzt wird. Bereits ein niedriger Prozentanteil des Calciumfluoridpulvers von etwa 0,1-0,9 Gew.-% des Elektrodengesamtgewichtes reicht hierbei aus, um die sonst bei Flußmittel-Kernelektroden bestehenden Probleme zu beheben, da das Calciumfluorid die Menge des in dem entstehenden Schweißmetall enthaltenen Sauerstoffs steuert. Das in dem Stahlmantel bzw. dessen verdichteten Kern ebenfalls enthaltene Metallegierungspulver wird nach bekannten Verfahren hergestellt und in den Kern der Elektrode eingebracht.

In bevorzugter Ausführungsform der Erfindung kann das Schweißelement im Kernmaterial ein pulvriges Polymer zur Herabsetzung des diffundierbaren Wasserstoffs im Schweißmetall enthalten. Dieses Polymer, das vorzugsweise in einer Menge von weniger als etwa 0,3 Gew.-% des Elektrodengesamtgewichts im Kern enthalten ist, hat einen Schmelzpunkt unterhalb etwa 540° C, so daß es in körniger Form in das Kernmaterial eingebracht werden kann und bei der Herstellung der Elektrode seine Zusammensetzung beibehält. Dieses Polymer setzt beim Schweißen Fluor frei, der während des Lichtbogenschweißens den diffundierbaren Wasserstoff im Schweißmetall einfängt bzw. aufnimmt, wodurch dieser auf einen Wert unter 1 ppm oder sogar unter 0,6 ppm verringert wird, ein Wert, der bisher nicht erreichbar war. Der Polymeranteil kann bis zu 0,4 Gew.-% des Elektrodengewichtes betragen und liegt zweckmäßig unterhalb etwa 0,3 Gew.-%. Obwohl nach der vorliegenden Erfindung auch eine metallene Massivdrahtelektrode verwendet werden kann, ist eine solche Elektrode bei Einsatz des Polymers mit dem Wasserstoffreinigungseffekt nicht möglich.

Aus obigem ergibt sich, daß das Schweißelement zweckmäßig eine Kernelektrode ist, die in ihrem Kern als einzige Flußmittelkomponente Calciumfluoridpulver zusammen mit dem für die Wasserstoffspülung verwendeten fluorhaltigen Polymer enthält. Ferner kann in dem Kern Metallegierungspulver in der erfindungsgemäßen Zusammensetzung zusammen mit dem basischen Flußmittel und dem der Wasserstoffreinigung dienenden Polymer enthalten sein. Das Kernmaterial wird dann von einem niedriggekohlten Mantel umschlossen, der sich zu einer Elektrode ausziehen läßt, deren Durchmesser kleiner ist als etwa 2,54 mm. Selbstverständlich ist es auch vorstellbar, daß der Mantel der Elektrode in einem elektrischen Legierungsofen hergestellt wird, um die Notwendigkeit zu vermeiden, das Legierungsmetall in Pulverform in das Kernmaterial der Elektrode einzubringen. Ob das Legierungsmetall sich in der genau eingestellten Menge im Metallmantel oder als Legierungspulver im Kernmaterial befindet, ist nicht entscheidend. Das Einbringen der Legierungsstoffe nach der Erfindung läßt sich unter Anwendung der üblichen Legierungstechnologie in unterschiedlicher Weise bewerkstelligen. Es hat sich jedoch gezeigt, daß es besonders zweckmäßig ist, zur Erzielung der gewünschten Schweißmetallegierung die Legierungsmetalle in Pulverform in das Kernmaterial einzubringen. Mit der Erfindung können Stähle extrem hoher Festigkeit im MIG-Schweißverfahren geschweißt werden, auch im Außer-Positionsschweißen.

Mit dem erfindungsgemäßen Verfahren kann die gewünschte, spezifische Legierungszusammensetzung des Schweißmetalls beim Lichtbogen-Schweißprozeß erzielt werden, wozu keine speziellen Legierungsverfahren erforderlich sind. Die Schweißraupe wird bei dem zunächst auf Raumtemperatur befindlichen oder auf eine Temperatur im Bereich von 120°C erwärmten Werkstück abgelegt. Diese Vorerwärmung kann zur Aufrechterhaltung der Eigenschaften des Grundmetalls nützlich sein; sie ist aber nicht erforderlich, um die Eigenschaften des eigentlichen Schweißmetalls zu erzielen, das mit dem erfindungsgemäßen abschmelzenden Schweißelement abgelegt wird. Die Erfindung bezieht sich auf einen Legierungsprozeß für das Schweißmetall und bewirkt ein automatisches Vergüten der Schweißmetallablage am Werkstück bei Raumtemperatur vor dem Schweißen und mit einer Abkühlung bei normaler Umgebungstemperatur. Dieser Legierungsprozeß beim Schweißen muß von dem Herstellungsprozeß eines hochfesten Legierungsstahls unterschieden werden und hat mit diesem nichts gemeinsam. Beim Herstellen von hochfestem Legierungsstahl können Zeit, Temperatur und Zusammensetzung der Legierungsbestandteile genau eingestellt werden, und die Temperaturverläufe, Abkühlungsgeschwindigkeiten und weitere metallurgische Faktoren laufen so ab, daß die gewünschte Legierung mit ihren spezifischen metallurgischen und mechanischen Eigenschaften erhalten wird. Ein solcher, gesteuerter Legierungsprozeß, wie er bei der Stahlherstellung stattfindet, läßt sich nicht auf einen Schweißprozeß übertragen, bei dem die entstehende Legierung sich unter vergleichsweise unkontrollierten Bedingungen bildet und bei dem insbesondere die Wärme im wesentlichen nach Maßgabe der durch den Lichtbogen-Schweißprozeß bestimmten Temperatur und der Geschwindigkeit gesteuert wird, mit der der Lichtbogen am Werkstück entlanggeführt wird. Nach dem erfindungsgemäßen Verfahren wird die abgelegte neue Legierung durch einen automatischen Vergütungsprozeß erhalten. Die Technologie zur Erzeugung eines hochfesten Stahls ist bekannt, im Schrifttum beschrieben und für das Grundmetall ohne weiteres anwendbar. Dieselbe Legierungstechnologie und die metallurgischen Anwendungstechniken sind aber unzweckmäßig und nicht anwendbar für die vergleichsweise unkontrollierte, zeitlich ungeregelte Temperatur- und Ablagerungsgeschwindigkeit, wie sie sich beim Ablegen der neuen Legierungen nach der Erfindung im Lichtbogen-Schweißprozeß ergibt.

Die Erfindung wird nachfolgend im Zusammenhang mit den in der Zeichnung gezeigten Ausführungsbeispielen näher erläutert. In der Zeichnung zeigen:
- Fig.1: in schematischer Querschnittsdarstellung eine basische Metall-Kernelektrode, die mit Vorteil zur Erzielung der erfindungsgemäßen Schweißmetallegierung verwendbar ist;
- Fig.2: in der Darstellung der Fig. 1 eine Modifikation dieser Elektrode;
- Fig.3: eine grafische Darstellung, die den Zusammenhang und die Abhängigkeit zwischen der basischen Elektrodenzusammensetzung und dem Sauerstoffgehalt im Schweißmetall zeigt;
- Fig.4: eine grafische Darstellung, die den Zusammenhang bzw. die Abhängigkeit zwischen dem Prozentanteil an fluorhaltigem Polymer am Elektroden-Gesamtgewicht und der Konzentration an diffundierbarem Wasserstoff im Schweißmetall wiedergibt;
- Fig. 5: zwei grafische Darstellungen, die die Abhängigkeit der Legierungsbestandteile nach der vorliegenden Erfindung und der Streckfestigkeit des Schweißmetalls sowie die Abhängigkeit zwischen der Schweißwärmezufuhr und der Streckfestigkeit zeigen.

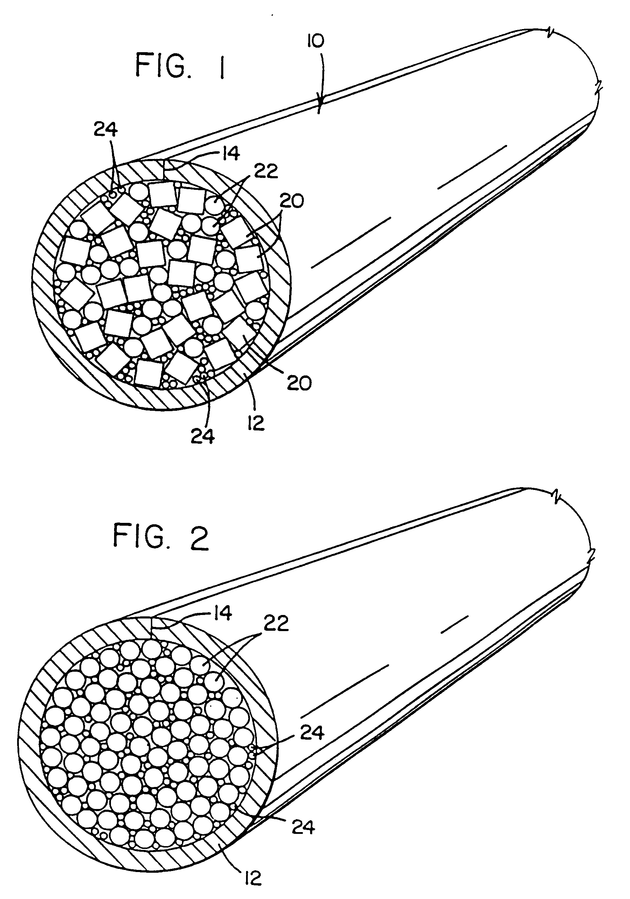

Die Zeichnungen zeigen die Erfindung im Zusammenhang mit einem bevorzugten Ausführungsbeispiel. Nach diesem Beispiel werden zwei Platten bzw. Bleche von 25,4 mm Dicke unter Verwendung eines zu 98 % aus Argon und zu 2 % aus Sauerstoff bestehenden Schutzgases mit einer Schweißwärmezufuhr von 21,5 kJoule/cm (55 kJoules/inch) bis 42,9 kJoule/cm (110 kiloJoules/inch) mit einer Vorerwärmung der Bleche auf eine Temperatur von 121° C verschweißt. Die Bleche bestehen aus einem hochfesten Stahl, nämlich einem Militär-Stahl HY-100. Zur Verschweißung der Bleche dient eine basische Metall-Kernelektrode 10, die mit einem Stahlmantel 12 mit niedrigem Kohlenstoffgehalt und mit einer Verbindungsnaht 14 versehen ist, wie dies in Fig. 1 schematisch gezeigt ist.

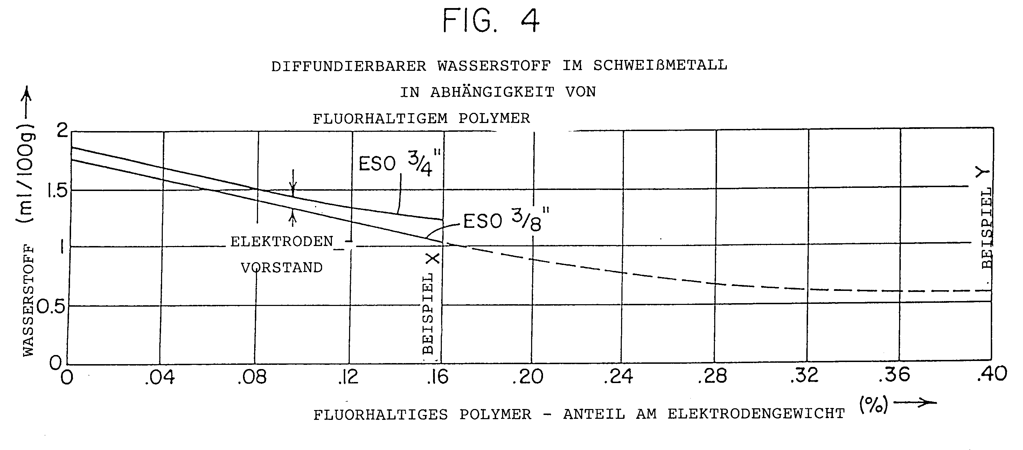

Die Naht 14 des Mantels 12 kann als Überlappungsnaht oder in anderer Weise entsprechend der bei der Herstellung von Schweißelektroden 10 üblichen Praxis hergestellt werden. Im Inneren des Mantels 12 befindet sich ein kompakter bzw. verdichteter Kern, bestehend aus Partikeln 20 des zur Erzielung der erfindungsgemäßen Schweißmetallegierung dienenden Legierungsmaterials (dargestellt als Quadrate), Calciumfluoridpartikeln 22 (dargestellt als große Kreise) und einer kleinen Menge aus Partikeln 24 eines fluorhaltigen Polymers (dargestellt als kleine Kreise). Das Kernmaterial wird durch Streckziehen der Elektrode 10 auf einen Durchmesser unterhalb 2,54 mm verdichtet. Im gezeigten Beispiel beträgt die Menge des fluorhaltigen Polymers für das Beispiel X 0,16 % und für das Beispiel Y (vgl. Fig. 4) 0,40 % des Elektrodengesamtgewichtes. Der Prozentanteil der Calciumfluoridpartikel am Elektrodengesamtgewicht beträgt 0,5 %. Die Metallegierungspartikel 20 sind in einem Prozentanteil von etwa 19 % des Elektrodengesamtgewichtes im Kernmaterial enthalten. Das verbleibende Gewicht ist dasjenige des Mantels bzw. des Röhrchens 12. Mit den Beispielen X und Y läßt sich eine zufriedenstellende Schweißung eines hochfesten Militär-Stahls, wie z.B eines solchen der Klassifikation HY-100, erreichen.

Fig. 2 ist eine Modifikation des bevorzugten Ausführungsbeispiels der Erfindung. Das im Mantel 12 befindliche Kernmaterial weist hier lediglich das Calciumfluoridpulver 22 und das der Wasserstoffreduzierung dienende Pulver 24 auf. Die Legierungsbestandteile zur Erzielung der erfindungsgemäßen Legierung sind hier im Metallmantel 12 enthalten.

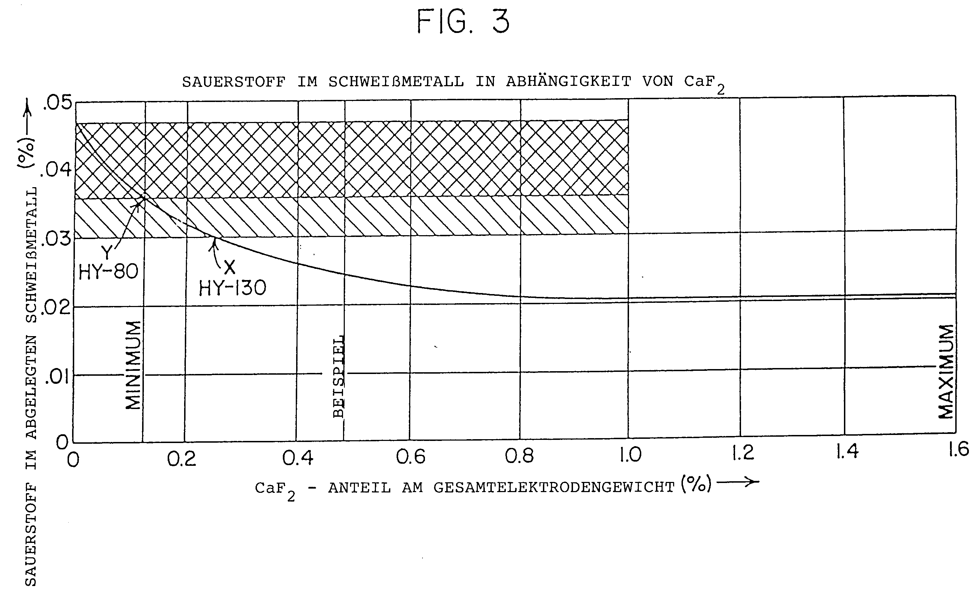

Wie das Diagramm nach Fig. 3 zeigt, beträgt die Menge an Calciumfluoridpartikeln im Kern weniger als etwa 1,6 % des Elektrodengesamtgewichts. Bei oder im Bereich einer Calciumfluoridmenge von 1 Gew.-% liegt der Punkt, an dem die Schweißqualität ihre Eignung zu verlieren beginnt. Ein Wert oberhalb etwa 1,6 % ergibt eine Schweißelektrode, die für den Einsatz beim Schweißen von Stählen hoher Streckgrenze in den verschiedenen Schweißpositionen nicht zufriedenstellt. Mit abnehmendem Calciumfluoridgehalt erhöht sich der Sauerstoffgehalt in der Schweißablagerung. Mit zunehmender Streckfestigkeit des hochfesten Stahls nimmt die Sauerstoffmenge im Schweißmetall ab, die nach den militärischen Spezifikationen zur Erzielung einer noch annehmbaren Schlagfestigkeit toleriert werden kann. Für. einen hochfesten Stahl in höherem Bereich, wie HY-130, muß die im Schweißmetall enthaltene Sauerstoffmenge kleiner sein als für einen hochfesten Stahl der Güteklasse HY-80. Demgemäß liegt der Mindestgehalt an Calciumfluorid für einen HY-130-Stahl in der Kurve der Fig. 3 in Nähe der Position X. Für einen hochfesten Stahl niedrigerer Streckgrenze, wie z.B. HY-80, kann der im Schweißmetall eingeschlossene Sauerstoff geringfügig höher liegen. Dies ist in der grafischen Darstellung durch die Position Y angegeben. Die unterste Grenze für den Anteil an Calciumfluorid schwankt demgemäß in Abhängigkeit von der Streckgrenze bzw. der Streckfestigkeit des hochfesten Stahls, für den die Erfindung jeweils zur Anwendung kommt. In allen Fällen weist aber die Schweißmetallegierung einen niedrigen Sauerstoffgehalt auf, der für das Schweißen hochfester Stähle erforderlich ist. Die Möglichkeit für einen höheren Sauerstoffgehalt ist in Fig 3 lediglich zum Zwecke der Erläuterung der Erfindung gezeigt, die im übrigen die für die praktische Anwendung der Erfindung erforderlichen untersten Grenzen für das Calciumfluorid angibt.

Die grafische Darstellung nach Fig. 4 zeigt die Abhängigkeit de Prozentanteiles an fluorhaltigem Polymer, wie z.B. Tetrafluoräthylen, von dem diffundierbaren Wasserstoff, der sich im Schweißmetall einstellt. Der Anteil an Wasserstoff ist hier dargestellt durch den Parameter ml/100 g, der in direkter Beziehung zu ppm steht. In der Praxis sollten hochstreckfeste Stähle einen Gehalt an diffundierbarem Wasserstoff unterhalb 2,0 ppm aufweisen. Ein Wasserstoffgehalt unter 1,0 ppm ist im allgemeinen nicht erreichbar, es sei denn unter extrem genauen Arbeitsbedingungen, deren Anwendung auf dem in Rede stehenden Arbeitsgebiet nicht in Betracht kommt. Aus Fig. 4 ist erkennbar, daß selbst ohne Zusatz eines wasserstoffreduzierenden Mittels der Forderung bezüglich des Wasserstoffgehalts allein durch Zusatz der pulvrigen Metallegierungsstoffe zu dem Calciumfluorid entsprochen werden kann.

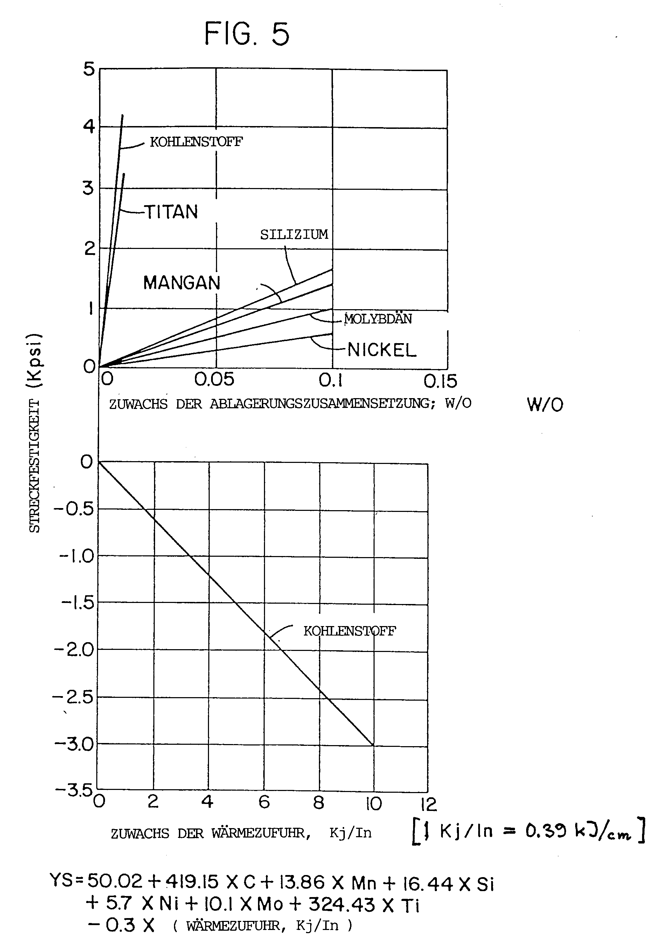

In Fig. 5 zeigt die obere grafische Darstellung die Abhängigkeit zwischen den die erfindungsgemäße Legierung bildenden Bestandteilen und der Streckfestigkeit der sich ergebenden Schweißmetallegierung. Kohlenstoff und Titan sind hierbei Verhältnismäßig kritisch, da hier schon kleinere Abweichungen zu deutlichen Änderungen in der Streckfestigkeit führen. Die Neigung der Kurven bestimmt das Verhältnis der relativen Prozentanteile dieser Bestandteile. In der unteren Kurve der Fig. 5 ist der Einfluß der Schweißwärmezufuhr gezeigt. Mit zunehmendem Wärme nimmt die Streckfestigkeit deutlich ab. Unterhalb der grafischen Darstellung der Fig. 5 ist eine Formel angegeben, die die Erfindung erläutert. Die Konstante 50,02 ist zusammen mit der Neigung der in den grafischen Darstellungen gezeigten Kurven empirisch abgeleitet. Durch Einsetzen der Prozentanteile an Kohlenstoff, Mangan, Silicium, Nickel, Molybdän und Titan kann zusammen mit der Schweißwärmezufuhr die Streckfestigkeit YS mit Hilfe der Formel bestimmt werden. Diese Formel ist zum Verständnis der Erfindung nützlich. Die Erfindung bezieht sich auf die Legierungsbestandteile des abgelegten Schweißmetalls. Die nachstehende Tabelle I gibt zehn Erfindungsbeispiele für eine abgelegte Legierung wieder, die unterschiedliche Prozentanteile an Kohlenstoff, Mangan, Silicium, Nickel, Molybdän und Titan aufweist. Zugleich läßt sich für jedes Beispiel die erzielte Streckfestigkeit zusammen mit der Charpy-Zahl bei 0° F (-17,5° C) entnehmen. Die Spalte E bezieht sich auf die prozentuale Dehnung der einzelnen Schweißmetallegierungen nach der Erfindung.

**Tabelle I**

| | Schweißwärme zufuhr kJ/in | C % | Mn % | Si % | Ni % | Mo % | Ti % | Ys ksi [1ksi= =6.89 MPa] | E % | CVN ft-Lbs [1ft-Lb = =1.356 J] |
|---|---|---|---|---|---|---|---|---|---|---|
| A | 110 | 0,050 | 2,82 | 0,29 | 1,05 | 0,77 | 0,013 | 105,6 | 22 | 70 |
| B | 55 | 0,048 | 2,96 | 0,31 | 1,24 | 0,76 | 0,016 | 124,0 | 20 | 60 |
| C | 110 | 0,053 | 2,88 | 0,30 | 1,23 | 0,62 | 0,017 | 103,1 | 23 | 74 |
| D | 55 | 0,052 | 3,06 | 0,33 | 1,03 | 0,68 | 0,022 | 121,1 | 22 | 77 |
| E | 85 | 0,051 | 3,22 | 0,34 | 1,44 | 0,80 | 0,018 | 120,8 | 22 | 64 |
| F | 55 | 0,054 | 3,30 | 0,36 | 1,35 | 0,82 | 0,022 | 130,3 | 20 | 42 |
| G | 75 | 0,070 | 3,08 | 0,39 | 1,48 | 0,78 | 0,019 | 133,5 | 20 | 52 |
| H | 55 | 0,068 | 3,18 | 0,36 | 1,25 | 0,85 | 0,021 | 139,1 | 19 | 48 |
| I | 85 | 0,066 | 3,72 | 0,40 | 1,69 | 0,93 | 0,019 | 137,0 | 19 | 41 |
| J | 55 | 0,065 | 3,74 | 0,41 | 1,54 | 0,97 | 0,021 | 145,6 | 19 | 35 |

In der Tabelle 1 sind die Beispiele C und D die bevorzugten Ausführungsbeispiele der Erfindung. Bei diesen Beispielen wurde eine spezielle Kernelektrode zur Ablagerung des Schweißmetalls auf einem Werkstück im Lichtbogenschweißprozeß bei einer Schweißwärmezufuhr von 42,9 kJ/cm (110 kJ/in) für Beispiel C bzw. von 21,5 kJ/cm (55 kJ/in) für Beispiel D eingesetzt. Die entstehende Legierungszusammensetzung ist in Tabelle I für diese beiden Lichtbogenschweißprozesse angegeben. Der Mangangehalt im Beispiel C beträgt 2,88 %, während der Kohlenstoffgehalt 0,053 % und der Titangehalt 0,017 % beträgt. Damit ergibt sich eine Streckfestigkeit von 710,8 N/mm² (103100 psi) mit einer Dehnung von 23 % und einer Charpy-Zahl von 74 bei -17,5° C (0° F). Bei Verminderung der Schweißwärmezufuhr auf 21,5 kJ/cm (55 kJ/in) wird der Manganganteil erhöht, während der Kohlenstoffgehalt im wesentlichen gleichbleibt und der Titananteil deutlich erhöht wird. Wie sich aus der Übersicht der Fig. 5 und der hier angegebenen Formel entnehmen läßt, führt diese Änderung zu einem abrupten Anstieg der Streckfestigkeit auf 834,3 N/mm² (121000 psi). Die Auswirkung in der Differenz im Mangan zwischen den Beispielen C und D ist weniger ausgeprägt, wie Fig. 5 und Tabelle I zeigen. Ein weiteres bevorzugtes Ausführungsbeispiel der Erfindung stellt eine Elektrode dar, aus denen sich die Beispiele G und H der nachfolgenden Tabelle II ergeben. Diese beiden Beispiele beziehen sich auf die entstehende Legierung, die sich bei Verwendung derselben Elektrode bei unterschiedlicher Schweißwärmezufuhr ergibt. Der Hauptlegierungsunterschied besteht wiederum im Titan. Die erhöhte Wärme bewirkt eine Verminderung im Titan und folglich eine deutliche Verminderung in der Streckfestigkeit. Jedes der beiden Paare der in Tabelle I aufeinander folgenden Beispiele betreffen dieselbe Elektrode, jedoch mit Schweißmetallablagerung unter Verwendung des Lichtbogenschweißprozesses mit unterschiedlicher Schweißwärmezufuhr. Die bevorzugten Beispiele sind die Legierungen der Beispiele C, D und diejenigen der Beispiele G und H. Wie in der Schweißtechnik bekannt, werden bestimmte Legierungsbestandteile mit einem kleineren Mengenverlust durch den Lichtbogen oder durch den Legierungsprozeß von der Elektrode in das Schweißmetall überführt. Diese Erscheinung ist auf dem Gebiet des Lichtbogenschweißen bekannt. Der Fachmann kann daher ohne weiteres die Legierungsanteile in einer Elektrode ableiten, die die Eigenschaften der Elektrode nach den früheren Patentanmeldungen aufweist, um die gewünschten Prozentanteile, wie in Tabelle I angegeben, zu erhalten. Für die bevorzugten Ausführungsbeispiele sind in Tabelle II die Anteile in Gew.-% der Elektrode angegeben, um das in Tabelle II angegebene abgelagerte Metall zu erhalten.

**Tabelle II**

| Elektrodenzusammensetzungen (%) | | |
|---|---|---|
| | Beispiele C & D | Beispiele G & H |
| Calciumfluorid | 0,55 | 0,50 |
| fluoridhaltiges Polymer | 0,13 | 0,42 |
| Mg-Legierung | 0,05 | 0,03 |
| Si-Legierung | 0,45 | 0,46 |
| Ti-Legierung | 0,10 | 0,10 |
| Mn-Legierung | 3,69 | 3,82 |
| Ni-Legierung | 0,96 | 1,04 |
| Zn-Legierung | 0,09 | 0,04 |
| Mo-Legierung | 0,67 | 0,78 |
| Eisen (enthält C) | Rest | Rest |

Nach Entwicklung der verschiedenen Elektroden entsprechend der technischen Lehre nach der oben genannten früheren europäischen Patentanmeldung und nach Vervollkommnung der Legierungszusammensetzungen, wie in Tabelle II angegeben, wurde erfindungsgemäß festgestellt, daß die Legierung, die sich aus einem den niedrigen Wasserstoffgehalt erzeugenden Element ergibt und die die für ihre Verwendung bei hochfesten Stahlwerkstücken gewünschten Eigenschaften besitzt, die nachfolgend angegebene Zusammensetzung besitzt:

| Legierungselemente | Schweißmetall-Prozentanteile |
|---|---|
| Kohlenstoff | 0,03 - 0,09 |
| Mangan | 2,5 - 4,0 |
| Silicium | 0,2 - 0,6 |
| Nickel | 0,8 - 1,8 |
| Molybdän | 0,5 - 1,3 |
| Titan | 0,01 - 0,05 |
| Sauerstoff | 0,015 - 0,040 |

Die Hauptbestandteile der neuen Schweißmetallegierung sind Kohlenstoff, Mangan und Titan. Der Kohlenstoff kann sowohl aus dem Elektrodenmantel als auch aus den Metallegierungspartikeln im Kern herrühren. Wenn der Kohlenstoffgehalt unter 0.03 % liegt, so verliert die Legierung entgegen der vorherrschenden Meinung an Kerbzähigkeit. Dies stellt eine sekundäre Überlegung für die Bemessung des Kohlenstoffgehaltes auf ein Mindestniveau von etwa 0.03 dar. Der Hauptfaktor für die Bemessung des Kohlenstoffgehaltes auf mindestens diesen Prozentanteil bildet die Erhöhung der Streckfestigkeit. Bei einem Kohlenstoffgehalt oberhalb 0,09 % erhöht sich die Schweißrißempfindlichkeit deutlich und es ergibt sich ein nicht-hinnehmbarer Verlust in der Kerbzähigkeit. Demgemäß ist in der erfindungsgemäßen Legierungszusammensetzung für den Kohlenstoff der Bereich von 0,03 bis 0,09 % angegeben. Von den drei Hauptbestandteilen der Legierung ist der hohe Mangangehalt von grundsätzlicher Bedeutung und auch neu. In der Vergangenheit wurde im allgemeinen mit einem Mangangehalt deutlich unter 2,0 % im Schweißmetall gearbeitet. Tatsächlich lag der Mangangehalt im allgemeinen unter 1,0 %. Durch Verminderung des Wasserstoffs auf weniger als 2,0 ppm läßt sich der Mangangehalt auf über 2,0 % anheben, wobei der Nickelanteil herabgesetzt werden kann. Die beiden die Festigkeit erhöhenden Komponenten, nämlich Mangan und Nickel werden in einer Weise abgestimmt, daß sich eine kleinere Menge an Karbid-Ausfällung ergibt. Mangan hat eine geringere Neigung für eine solche Ausfällung als Nickel. Durch Verminderung des Anteils an diffundierbarem Wasserstoff in einer Weise, wie dies in der genannten früheren Patentanmeldung offenbart ist, läßt sich der Mangananteil erhöhen und gleichzeitig der Nickelanteil senken. Mangan wird in einem Bereich von 2,5 bis 4,0 % verwendet. Wie Fig. 5 zeigt, steigt die Streckfestigkeit mit zunehmendem Mangananteil. Je höher die mit der erfindungsgemäßen Legierung zu erreichende Streckfestigkeit ist, um so höher liegt daher der Mangananteil. Bei 4,0 % Mangan ergibt sich eine erhöhte Widerstandsfähigkeit gegenüber Rißbildung. Titan stellt ebenfalls ein kritisches Element in der dreifach-Gruppierung Kohlenstoff, Mangan und Titan dar. Wenn der Gehalt an Titan zu niedrig ist, ergibt sich eine niedrige Kerbzähigkeit und auch eine niedrige Streckfestigkeit. Ist der Titangehalt zu hoch, z.B. bei etwa 0,05 %, so wird die Kerbfestigkeit herabgesetzt und die Widerstandsfähigkeit gegenüber Rißbildung erhöht. Demgemäß ist für den Titananteil der Bereich von 0,01 bis 0,05 % festgelegt.

Zusätzlich zu den Hauptbestandteilen Kohlenstoff, Mangan und Titan sind nach der Erfindung sekundäre Legierungselemente, nämlich Silicium, Nickel und Sauerstoff, vorgesehen. Silicium ist ein Desoxidationsmittel, das die Porosität des entstehenden Schweißmetalls unterdrückt. Bei einem Gehalt oberhalb etwa 1,0 % Silicium ergibt sich ein Anstieg der Schweißrißempfindlichkeit. Aus diesem Grund ist für Silicium der allgemeine Bereich von 0,2 bis 0,6 % vorgesehen. Innerhalb dieses Bereichs bewirkt das Silicium noch eine hinnehmbare Porosität, ohne Erhöhung der Rißempfindlichkeit des Schweißmetalls.

Was das Nickel in der neuen Legierung angeht, so wird dieses, wie oben erwähnt, auf einen unter dem normalerweise vorgesehenen Gehalt festgelegt und zusammen mit Mangan zur Einstellung der Streckfestigkeit verwendet. Nickel dient dabei zur Aufrechterhaltung der Kerbfestigkeit bei den hohen Streckfestigkeiten. Das Nickel bewirkt auch, daß die Mikrostruktur weniger empfindlich auf die Abkühlungsgeschwindigkeit reagiert. Allerdings sollte Nickel nicht in einem Prozentanteil über etwa 2,0 % vorhanden sein. Wird die obere Grenze überschritten, wie dies bei der Stahlherstellung der Fall ist, so erhöht sich die Karbid-Ausfällung. Der niedrigere Nickelanteil begünstigt die Herabsetzung der Rißempfindlichkeit Demgemäß liegt der Nickelanteil unter 2,0 %, wenn der Mangananteil oberhalb 2,5 % liegt. Dies stellt ein neues Verhältnis für diese beiden die Festigkeit beim Lichtbogenschweißprozeß erhöhenden Komponenten dar. Wie Fig. 5 zeigt, ist der Einfluß des Mangans auf die Streckfestigkeit größer als derjenige des Nickels. Demgemäß wird Mangan zur Erhöhung der Streckfestigkeit verwendet, während Nickel mit niedrigen Anteilen hauptsächlich zur Aufrechterhaltung der Kerbzähigkeit und zur Steuerung der Mikrostruktur der Gefüge eingesetzt wird, so daß die sich bildende Legierung bei Abkühlung unter Raumtemperaturbedingungen im Anschluß an den Schweißprozeß zuverlässig gehärtet bzw. vergütet ist. Die Erfindung verwendet ferner Sauerstoff in geringem Anteil. Der Sauerstoffgehalt liegt dabei im Bereich von 0,015 bis 0,040 %, vorzugsweise unter etwa 0,035 %. Bei Vorhandensein von mindestens etwa 0,02 % Sauerstoff stabilisiert dieser die Mikrostruktur und beeinflußt die Art des Gefüges der sich bildenden Legierung im Hinblick auf eine Erhöhung der Kerbfestigkeit der entstehenden Legierung. Oberhalb von 0,04 % bewirkt der Sauerstoff einen Anstieg der Verunreinigungen der Legierung und vermindert außerdem die Kerbfestigkeit. Unterhalb etwa 0,015 % stellt sich ein Verlust in der Kerbfestigkeit ein. Der Sauerstoff trägt außerdem zur Einstellung der Mikrostruktur der neuen Legierung bei. Bei höherem Sauerstoffniveau, als dies erfindungsgemäß vorgesehen ist, ergibt sich eine Abnahme der Kerbzähigkeit.

Molybdän ist nur wahlweise Bestandteil in der Legierung. Die Legierung kann eine Streckfestigkeit zwischen 586 und 620 N/mm² (85000 bis 90000 psi) auch ohne Molybdän erhalten. Um eine Streckfestigkeit oberhalb von 689 N/mm² (100000 psi) zu erhalten, sollte Molybdän zugesetzt werden. Molybdän bewirkt in gewissem Umfang eine Karbid-Ausfällung, die schädlich ist. Der Molybdängehalt sollte daher im Bereich von 0,5 bis 1,5 % gehalten werden.

Durch Erzeugung einer Legierung für das im Lichtbogenschweißprozeß abgelagerte Schweißmetall mit den erfindungsgemäß vorgesehenen Anteilen der Legierungsbestandteile wird eine hohe Zug- und Dehnfestigkeit in Verbindung mit den geforderten physikalischen und metallurgischen Eigenschaften erhalten.

## Patentansprüche

1. Abschmelzendes Schweißelement zur Ablagerung einer Schweißmetallraupe auf einem Stahlwerkstück mit einer Schweißwärmezufuhr von weniger als 50,7 kJ/cm, wobei die Streckfestigkeit des Schweißmetalls oberhalb etwa 583,5 N/mm² liegt, mit folgender Zusammensetzung der als Schweißmetall eingesetzten Stahllegierung:
0,0 - 0,1 % Kohlenstoff
2,5 - 4 % Mangan
0,01 - 0,05 % Titan
0 - 1 % Silizium
0 - 2 % Nickel
0 - 0,04 % Sauerstoff
Optional 0 - 1,5 % Molybdän
Rest Eisen und übliche Verunreinigungen,
wobei der Anteil von Wasserstoff im Schweißmetall unterhalb 2,0 ppm liegt (Prozentangaben in Gew.% des Schweißmetalls).

2. Schweißelement nach Anspruch 1, **dadurch gekennzeichnet, daß** der Kohlenstoffgehalt im Bereich von 0,03 bis 0,09 Gew.% liegt.

3. Schweißelement nach Anspruch 1 oder 2, **dadurch gekennzeichnet, daß** der Siliciumgehalt im Bereich von 0,2 bis 0,6 % liegt.

4. Schweißelement nach einem der Ansprüche 1 bis 3, **dadurch gekennzeichnet, daß** der Nickelgehalt im Bereich von 0,8 bis 1,8 % liegt.

5. Schweißelement nach einem der Ansprüche 1 bis 4, **dadurch gekennzeichnet, daß** der Sauerstoffgehalt im Bereich von 0,015 bis 0,035 % liegt.

6. Schweißelement nach einem der Ansprüche 1 bis 5, **dadurch gekennzeichnet, daß** der Molybdängehalt im Bereich von 0,5 bis 1,3 % liegt.

7. Schweißelement nach einem oder mehreren der Ansprüche 1 bis 6, **dadurch gekennzeichnet, daß** bei einer Streckfestigkeit des Schweißmetalls oberhalb etwa 686,5 N/mm² bei einem Molybdängehalt unterhalb 1,5 % der Anteil an diffundierbarem Wasserstoff im Schweißmetall unterhalb 1,0 ppm liegt.

8. Schweißelement nach einem oder mehreren der Ansprüche 1 bis 7, **dadurch gekennzeichnet, daß** es aus einer Kernelektrode besteht, die als Flußmittel im Kernmaterial pulvriges Calciumfluorid in einer Menge von weniger als 1,6 %, vorzugsweise von 0,1 bis 0,9 % des Elektrodengesamtgewichtes enthält.

9. Schweißelement nach einem der Ansprüche 1 bis 8, **dadurch gekennzeichnet, daß** es im Kernmaterial zur Herabsetzung des diffundierbaren Wasserstoffs im Schweißmetall ein pulvriges Polymer, vorzugsweise in einer Menge von weniger als etwa 0,3 % des Elektrodengewichtes, enthält.

10. Verfahren zur Ablagerung einer Schweißmetallraupe auf einem Stahlwerkstück, **gekennzeichnet durch** folgende Verfahrensschritte:
a) Verwendung eines Schweißelements nach einem der Ansprüche 1 bis 9;
b) Verwendung eines Lichtbogens zum Aufschmelzen des Schweißelementes und zur Ablagerung des Schweißmetalls am Werkstück;
c) Bewegen des Schweißelementes während des Aufschmelzens entlang dem Werkstück mit einer solchen Geschwindigkeit, daß die Schweißwärmezufuhr unterhalb 50,7 kJ/cm liegt.

## Claims

1. A fusing welding element for depositing a welding metal bead on a steel workpiece with a welding-heat delivery of less than 50.7 kJ/cm, in which respect the resistance to stretching of the welding metal is above approximately 583.5 N/mm², with the following composition of the steel alloy which is used as welding metal:
0.0 - 0.1 % Carbon
2.5 - 4 % Manganese
0.01 - 0.05 % Titanium
0 - 1 % Silicon
0 - 2 % Nickel
0 - 0.04 % Oxygen
Optional 0 - 1.5 % Molybdenum
Remainder: Iron and normal impurities,
where the proportion of hydrogen in the welding metal is below 2.0 ppm (percentages in weight-% of the welding metal).

2. A welding element according to claim 1, **characterized in that** the carbon content lies in the region between 0.03 and 0.09 weight-%.

3. A welding element according to claim 1 or 2, **characterized in that** the silicon content lies in the region between 0.2 and 0.6 weight-%.

4. A welding element according to one of claims 1 to 3, **characterized in that** the nickel content lies in the region between 0.8 and 1.8 weight-%.

5. A welding element according to one of claims 1 to 4, **characterized in that** the oxygen content lies in the region between 0.015 and 0.035 %.

6. A welding element according to one of claims 1 to 5, **characterized in that** the molybdenum content lies in the region between 0.5 and 1.3%.

7. A welding element according to one or more of claims 1 to 6, **characterized in that**, with a resistance to stretching of the welding metal above approximately 686.5 N/mm² with a molybdenum content of below 1.5%, the proportion of diffusible hydrogen in the welding metal lies below 1.00 ppm.

8. A welding element according to one or more of claims 1 to 7, **characterized in that** it is composed of a core electrode with a fluxing agent in the core material in the form of powdered calciumfluoride in a quantity of less than 1.6%, preferably between 0.1 and 0.9%, of the electrode's total weight.

9. A welding element according to one of claims 1 to 8, **characterized in that** it the core material contains, for the purpose of reducing the diffusible hydrogen in the welding metal, a powdered polymer, preferably in a quantity of less than approximately 0.3% of the electrode weight.

10. A process for depositing a welding metal bead on a steel workpiece, **characterized by** the following process stages:
a) use of a welding element according to one of claims 1 to 9;
b) use of an arc for melting the welding element and for depositing the welding metal on a workpiece;
c) moving the welding element during melting along the workpiece at such a speed that the welding-heat delivery is below 50.7 kJ/cm

## Revendications

1. Elément de soudage fusible pour déposer une passe de métal d'apport sur une pièce en acier, avec un apport de chaleur de soudage inférieur à 50,7 kJ/cm, la résistance à l'allongement du métal d'apport étant supérieure à environ 583,5 N/mm2, avec la composition suivante des alliages en acier, utilisés en tant que métal d'apport:
0,0 - 0,1 % Carbone
2,5 - 4 % Manganèse
0,01 - 0,05 % Titane
0 - 1 % Silicium
0 - 2 % Nickel
0 - 0,04 % Oxygène
en option 0 - 1,5 % Molybdène
le reste Fer et autres impuretés,
la proportion d'hydrogène dans le métal d'apport étant inférieure à 2,0 ppm (le pourcentage étant en % en poids du métal d'apport).

2. Elément de soudage selon la revendication 1, caractérisé en ce que la teneur en carbone est comprise entre 0,03 et 0,09 % en poids.

3. Elément de soudage selon la revendication 1 ou la revendication 2, caractérisé en ce que la teneur en silicium est comprise entre 0,2 et 0,6 %.

4. Elément de soudage selon l'une des revendications 1 à 3, caractérisé en ce que la teneur en nickel est comprise entre 0,8 et 1,8 %.

5. Elément de soudage selon l'une des revendications 1 à 4, caractérisé en ce que la teneur en oxygène est comprise entre 0,015 et 0,035 %.

6. Elément de soudage selon l'une des revendications 1 à 5, caractérisé en ce que la teneur en molybdène est comprise entre 0,5 à 1,3 %.

7. Elément de soudage selon l'une ou plusieurs des revendications 1 à 6, caractérisé en ce pour une résistance à l'allongement du métal d'apport supérieure à environ 686,5 N/mm2 et pour une teneur en molybdène inférieure à 1,5 %, la proportion d'hydrogène pouvant être diffusée dans le métal d'apport est inférieure à 1,0 ppm.

8. Elément de soudage selon l'une ou plusieurs des revendications 1 à 7, caractérisé en ce que ledit élément de soudage est constitué d'une électrode à noyau contenant dans le matériau du noyau, en tant que flux, du fluorure de calcium pulvérulent, en une quantité inférieure à 1,6 %, de préférence comprise entre 0,1 et 0,9 % du poids total de l'électrode.

9. Elément de soudage selon l'une des revendications 1 à 8, caractérisé en ce que ledit élément de soudage contient dans le matériau du noyau, en vue de diminuer la teneur en hydrogène pouvant être diffusée dans le métal d'apport, un polymère sous forme de poudre, de préférence en une quantité inférieure à environ 0,3 % du poids de l'électrode.

10. Procédé pour déposer une passe de métal d'apport sur une pièce en acier, caractérisé par les étapes suivantes :
a) Utilisation d'un élément de soudage selon l'une quelconque des revendications 1 à 9;
b) Utilisation de l'arc électrique pour fondre l'élément de soudage et pour déposer le métal d'apport sur la pièce soudée;
c) Déplacement de l'élément de soudage le long de la pièce soudée, au cours de la fusion du métal d'apport, à la vitesse requise pour que l'apport de chaleur de soudage soit inférieur à 50,7 kJ/cm.
